# EUROPÄISCHE PATENTSCHRIFT

(11) **EP 0 888 965 B1**
(45) Veröffentlichungstag und Bekanntmachung des Hinweises auf die Patenterteilung: **17.12.2003**
(21) Anmeldenummer: 98103977.9
(22) Anmeldetag: 06.03.1998
(51) Int. Cl.: B64D 13/06, B64C 13/00

(54) **Injektorluftauslass zur Temperatur- und Rauchgasüberwachung**
Injector air outlet for temperature and smoke monitoring
Buse d'aération pour la surveillance de la température et des fumées

(30) Priorität: 04.07.1997 DE 19728595
(43) Veröffentlichungstag der Anmeldung: 07.01.1999
(73) Patentinhaber: Airbus Deutschland GmbH, 21129 Hamburg (DE)
(72) Erfinder: Scherer, Thomas, Dr.-Ing., 22587 Hamburg (DE); Buchholz, Uwe, Dipl.-Ing., 21640 Bliedersdorf (DE)
(74) Vertreter: Hansmann, Dierk, Dipl.-Ing.

(56) Entgegenhaltungen:
- EP-A- 0 223 471
- DE-C- 19 509 773
- US-A- 2 613 587
- US-A- 3 368 406
- US-A- 3 687 054

## Beschreibung

Die Erfindung bezieht sich auf einen Injektorluftauslaß und ein Verfahren zur Beblasung von abgeschlossenen Rumpfbereichen eines Flugzeuges. Ihre möglichen Anwendungen liegen im Bereich der Klimatisierung von Flugzeugfrachträumen, innerhalb denen übliches (ungefährliches) und / oder gefährliches Frachtgut gelagert oder transportiert wird.

Die Klimatisierung (das Belüften mit gleichzeitigem Heizen oder Kühlen) von Flugzeugfrachträumen erfolgt bekanntermaßen durch das Einblasen von temperaturgeregelter Zuluft an mehreren frachtraumverteilten Stellen (über Luftauslässe). Diese Raumluft verläßt den Frachtraum durch Abluftöffnungen. Durch die Anordnung der Einblas- und Abluftöffnungen im Frachtraum wird ein spezifisches Raumluftströmungsprofil erzeugt. Dabei soll die räumliche Temperaturverteilung auf die vorhandenen Umweltbedingungen abgestimmt sein. Deswegen stellt eine flugzeuginterne Frachtraumtemperaturregelung die für die aktuellen Umgebungsbedingungen notwendige Einblaslufttemperatur der Zuluft in Abhängigkeit von der Frachtrauminnentemperatur ein. Diese Frachtrauminnentemperatur entspricht einer repräsentativen Innentemperatur des Gesamtfrachtraumes. Dabei ist die Positionierung eines Temperatursensors im Frachtraum aufgrund der beschriebenen Temperaturverteilung zwingend vorgeschrieben. Für eine Zwangsbelüftung des Temperatursensors sorgt eine separate Unterdruckquelle (ein Gebläse) oder der verfügbare Abluftstrom des Frachtraumes. Auf Grund der sich laufend ändernden Raumluftströmung durch wechselnde Beladungskonfigurationen (Frachtgut ect.) entstehen erhebliche Abweichungen zwischen der festgestellten (gemessenen) Frachtraumtemperatur und der tatsächlichen, repräsentativen Innentemperatur des Gesamtfrachtraumes.
Die Rauchüberwachung der Flugzeugfrachträume wird separat (getrennt von der Temperaturüberwachung) vorgenommen. Frei im Frachtraum positionierte oder über ein Unterdrucksystem (über ein Gebläse) mit Frachtraumluft versorgte Rauchwarngeber melden die Entstehung von Rauch. Zur Erfüllung der Flugzeugzulassungsvorschriften ist vorgeschrieben, daß die Rauchwarngeber innerhalb einer Minute nach der Entstehung von Rauch ein akustisches Warnsignal abgeben. Dabei wird die Verteilung des Rauches im Frachtraum nach dessen Entstehung durch das vorgenannte Raumströmungsprofil bestimmt. Damit die vorerwähnte Vorschrift erfüllt wird, sind die Rauchwarngeber im Frachtraum derartig zu positionieren, daß sie innerhalb der vorgeschriebenen Zeitgrenze im Ernstfall von dem Raumluftströmungsprofil mit Rauch versorgt werden.

Da das Raumluftströmungsprofil sich im Flugzeugfrachtraum durch die (ständig wechselnden) Beladungskonfigurationen ändern wird, unterliegen auch die Rauchwarngeber einem beladungsabhängigen Meßfehler. Um diesen Meßfehler für alle möglichen Beladungskonfigurationen zu minimieren bzw. in vertretbaren Grenzen zu halten, wären mehrere Versuchsreihen erforderlich, deren Ergebnis(se) einen Kompromiß zwischen der Konfigurationsvielfalt und dem erzeugten Meßfehler darstellen würde.

Für die Lösung des Problems einer ständigen Überwachung der Temperatur- und Rauchgasentwicklung in abgeschlossenen Rumpfbereichen (Frachträumen) mit geringstem (wenigstens minimiertem) Meßfehler, deren Überwachungsergebnis(se) vollkommen unabhängig von der Beladungssituation bzw. der Raumauslastung in Fracht- oder Passagierbereichen eines Flugzeuges ermittelt werden, wodurch die Zuverlässigkeit der Temperaturregelung und der Rauchwarngebung für derartige Rumpfbereiche des Flugzeuges erhöht wird, ist kein Vorbild bekannt.

Es liegt der Erfindung die Aufgabe zugrunde, einen gattungsgemäßen Injektorluftauslaß derart zu gestalten, daß er die Fähigkeit besitzt, durch Beblasung des Rumpfbereiches das Strömungsprofil der Raumluft dahingehend zu beeinflussen, damit eine starke Durchmischung der Raumluft erreicht und gleichfalls eine Temperaturschichtung der Raumluft verhindert wird, um eine homogene Verteilung der anzusaugenden Raumluft, die sich unabhängig der Raumauslastung (des Beladungszustandes) einstellt, zu erzielen. Mit dem Injektorluftauslaß kann die Temperaturregelung für abgeschlossene Rumpfbereiche eines Flugzeuges sowie das Ansprechverhalten der Rauchwarngebung für derartige Bereiche verbessert werden.

Diese Aufgabe wird durch die in den Ansprüchen 1 und 16 angegebenen Maßnahmen gelöst. In den weiteren Unteransprüchen sind zweckmäßige Weiterbildungen und Ausgestaltungen dieser Maßnahmen angegeben.

Die Erfindung ist in einem Ausführungsbeispiel anhand der beigefügten Zeichnung näher beschrieben. Dabei wird das Verfahren anhand des in der Zeichnung dargestellten Injektorluftauslasses näher erläutert wird.

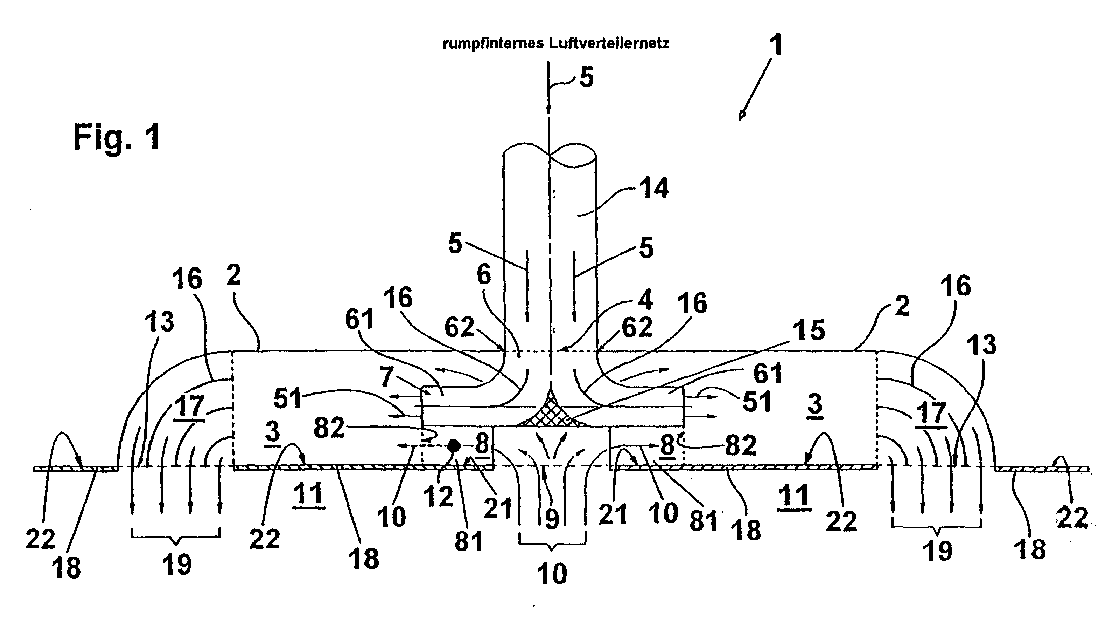

In der Fig. 1 ist der Injektorluftauslaß 1 zur Temperatur- und Rauchgasüberwachung von abgeschlossenen Rumpfbereichen 11 eines Flugzeuges in einem Übersichtsbild dargestellt. Danach besteht der Injektorluftauslaß 1 aus einem Gehäuse, dessen Körperwandung 2 eine Injektormischkammer 3 einschließt. Die Gehäuseform des Injektorluftauslasses 1 wird maßgeblich (mit) durch den (im Längsschnitt dargestellten) horizontalen Verlauf der Injektormischkammer 3 beeinflußt. Mittig dem oberen (horizontal liegenden) Bereich der Körperwandung 2 befindet sich ein Zulufteingang 4 (eine Zuluftöffung), welcher der Körperwandung 2 ausgenommen ist. Mit dem Zulufteingang 4 ist ein vertikal in die Injektormischkammer 3 hineinragendes Luftabzweigelement 6 verbunden, dessen Anschlußbereich 62 (den Strömungsquerschnitt der Zuluft berücksichtigend) am neben dem Lufteingang 4 befindlichen Randbereich der Körperinnenwandung formschlüssig angeschlossen ist. Dabei sind beispielgemäß dem Anschlußbereich 62 des Luftabzweigelementes 6 zwei in die Injektormischkammer 3 ragende Luftabzweigungen 61 T-förmig abgezweigt, die innerhalb der Injektormischkammer 3 horizontal verlaufen. Der Zulufteingang 4 wird mit einem vertikal gerichteten Zuluftstutzen 14 (einem Ansatzrohrstück) erweitert, der (den Strömungsquerschnitt der Zuluft berücksichtigend) am neben dem Lufteingang 4 befindlichen Randbereich der Körperaußenwandung formschlüssig (auf der Körperwandung 2) angesetzt ist.
Ausführungsgemäß sind die Luftabzweigungen 61 als Rohrkrümmer ausgebildet, deren endseitiger Rohrübergang einseitig in einen Wandungsbereich mit vereintem Krümmerquerschnitt übergeht, der den (sogenannten) Anschlußbereich 62 des Luftabzweigelementes 6 (mit rohrförmigen Querschnitt) darstellt. Dabei mündet der nicht gekrümmte horizontal verlaufende Rohrendbereich der beiden Rohrkrümmer in die Injektormischkammer 3. Den zueinander gerichteten Bogen der beiden (als) Rohrkrümmer (ausgebildeten Luftabzweigungen 61) ist ein Füllelement 15 befestigt, das der Wandung der Rohrkrümmer und dem horizontalen Verlauf der Rohrendbereiche der Rohrkrümmer angepaßt ist.

Nahe dem Ausgang der (des) betreffenden Luftabzweigung 61 (Rohrkrümmers) ist innerhalb des Luftströmungsquerschnittes eine (nicht gezeigte) Injektordüse 7 installiert, auf deren Funktion später eingegangen wird.

Die Luftabzweigungen 61 und ein Teilabschnitt 21 der Körperwandung 2, der unterhalb der Rohrendbereiche der Rohrkrümmer angeordnet ist, grenzen einen horizontal verlaufenden Nebenluftkanal 8 ein. Dabei ist mittig dem Teilwandabschnitt 21 ein Nebenlufteingang 9 (eine Eintrittsöffnung für eine Abluft 10 des abgeschlossenen Rumpfbereiches) ausgenommen. Dieser Nebenlufteingang 9 ist gegenüberliegend dem Füllelement 15 angeordnet. Er unterteilt den Nebenluftkanal 8 in zwei horizontal liegende Nebenluftkanalgänge 81, die sich seitwärts (links- und rechtsseitig neben) dem Nebenlufteingang 9 befinden. Am Nebenluftkanalaustritt 82 der betreffenden Luftabzweigung 61 (des Rohrendbereiches des betreffenden Rohrkrümmers) endet (vertikal betrachtet) auch der (Bereich des) einzelne(n) Nebenluftkanalgang(es) 81, dem der Bereich der Injektormischkammer sich anschließt.

Gleichfalls schließt der Teilwandabschnitt 21 der Körperwandung 2 mit dem am Nebenluftkanalaustritt 82 endenden Luftströmungsquerschnitt des Nebenluftkanals 8 ab. Es wird vollständigkeitshalber erwähnt, daß dem Teilwandabschnitt 21 weitere Folgewandabschnitte 22 nachgeordnet sind, die in horizontaler Lage an diesen angrenzen.

Nahe der betreffenden Nebenluftaustritte 82 ist innerhalb des Luftströmungsquerschnittes des nebenluftkanals 8 jeweils eine Sensoreinheit 12 angeordnet. Der Sensoreinheit 12 besteht aus einem Temperatursensor und einem auf Rauchgaspartikel sensibilisierten Sensor. Beide Sensoren sind separat mit einer (dem Injektorluftauslaß externen) Regel- und / oder Warneinheit, die innerhalb des Flugzeugrumpfes positioniert ist (sind) und auf deren Funktion später näher eingegangen wird, elektrisch verbunden. Dabei sind beispielsweise der Temperatursensor mit einer Lufttemperaturregeleinheit und der auf Rauchgaspartikel sensibilisierte Sensor mit einer Rauchwarngebereinheit über entsprechende Signalleitungen verbunden.

Aus dem Längsschnitt des in Fig. 1 dargestellten Injektorluftauslasses 1 kann man entnehmen, daß der beiderseitig gekrümmte Endbereich der horizontal liegenden Injektormischkammer 3 (endseitig links und rechts) jeweils mit einem Luftaustrittsendbereich 17 abschließt. Diese beiden Bereiche sind mit Bestandteil der Injektormischkammer 3, wobei ihnen jeweils ein Abluftabgang 13 (eine dem Rumpfbereich zugewandte Austrittsöffnung) ausgenommen ist. Dabei wird den nachgeordneten Folgewandabschnitten 22 der Körperwandung 2, die an den Teilwandabschnitt 21 angrenzen, jeweils wenigstens der betreffende Abluftausgang 12 ausgenommen, so daß die Luftströmungsquerschnitte des Injektorluftauslasses 1 luftströmungsmäßig miteinander verbunden sind.

Es wird ergänzt, daß mittig dem Luftströmungsquerschnitt der beiden Rohrkrümmer (der beiden Luftabzweigungen 61) des Luftabzweigelementes 6 wenigstens ein luftströmungsbegünstigendes Luftleitgitter 16 angeordnet ist, das den Krümmungsbereich der beiden Rohrkrümmer überspannt. Ebenso umfaßt der Luftströmungsquerschnitt der beiden Luftaustrittsendbereiche 17 der Injektormischkammer 3, der sich vertikal des Abluftausganges 13 (bis an den oberhalb liegenden Bereich der Körperinnenwandung) aufspannt, wenigstens ein luftströmungsbegünstigendes weiteres Luftleitgitter 16.
Ausführungsgemäß ist der Bereich der Körperwandung 2 des Injektorauslasses 3, der den Teilwandbereich 21 und die diesem angrenzenden Folgewandbereiche 22 umfaßt, in eine den Rumpfbereich 11 auskleidende Innenraumverkleidung integriert, wobei die Öffnungen des Nebenlufteinganges 9 und des jeweiligen Abluftausganges 13 der Injektormischkammer 3 der Innenraumverkleidung ausgespart sind.

Der Injektorauslaß 3 stellt eine in den Rumpfbereich 11 ragende autarke Einheit dar, die in die Innenraumverkleidung des Flugzeugrumpfes integriert ist. Die Luftabzweigungen 61 des Luftabzweigeelementes 6 und der Nebenluftkanal 8 sowie der Bereich der Körperwandung 2 des Injektorauslasses 3, der den Teilwandbereich 21 und die diesem angrenzenden Folgewandbereiche 22 umfaßt, liegen parallel zur Innenraumverkleidung und sind nebeneinander angeordnet, wobei der Zulufteingang 4 in der Innenraumverkleidung lokalisiert ist, dem (wie später erläutert) von dort aus das am Flugzeugrumpf befestigte rumpfinterne Luftverteilernetz angeschlossen ist.

Nachfolgend wird auf den zweckgemäßen Einsatz des Injektorluftauslasses 1 innerhalb abgeschlossener Rumpfbereiche des Flugzeuges näher eingegangen. Der Injektorluftauslasses 1 wird zur Temperatur- und Rauchgasüberwachung der Frachtraumbereiche eingesetzt, um den drohenden Gefahren prophylaktisch zu begegnen. Gleichzeitig wird mit ihm die Klimatisierung und Belüftung derartiger Rumpfbereiche betrieben.
Dem (wie vorbeschrieben) installierten Injektorluftauslaß 1 ist am Zuluftstutzen 14 das (nicht gezeigte) rumpfinterne Luftverteilernetz angeschlossen. Ihm wird von dort ein Teil der temperaturgeregelten (Mischluft als aufbereitete) Rezirkulationsluft als Zuluft 5 zugeführt. Der Zuluftstrom der Zuluft 5 strömt (unter Luftdruck) über den Zulufteingang 4 des Injektorluftauslasses 1 in das Luftabzweigelement 6 ein.

Der Zuluftstrom, der einen charakteristischer Treiberluftstrom darstellt, wird durch die beiden Luftabzweigungen 61 (Rohrkrümmer), die dem Luftabzweigelement 6 integriert sind, in zwei entgegengesetzt gerichtete Zuluftteilströme 51 aufgeteilt, die (nach der vorbeschriebenen Darstellung des Injektorluftauslasses 1) ausgangs der Luftabzweigzweigungen 61 (Rohrkrümmer) horizontal und parallel zur Körperwandung 2 des Injektorluftauslasses 1 in die horizontal liegende Injektormischkammer 3 einströmen. Durch die Injektordüse 7 (Treiberstromdrüse), die nahe dem Ausgang der einzelnen Luftabzweigung 61 (des einzelnen Rohrkrümmers) installiert ist, erhält der Zuluftstrom 5 den notwendigen Impuls, so daß er in der Injektormischkammer 3 einen Unterdruck erzeugt. Mit dem einsetzenden Unterdruck saugt der Injektorluftauslaß 1 über den (sogenannten) Nebenlufteingang 9 aus dem (in der Fig. 1 mit dargestellten) Rumpfbereich 11 (dem Frachtraum) Abluft 10 an, deren Temperaturinhalt und Rauchgaspartikelkonzentration es zu überwachen gilt. Der Abluftstrom strömt beiderseitig den Nebenluftkanalgängen 81 des Nebenluftkanals 8 ein, wobei er nahe dem betreffenden Nebenluftaustritt 82 des einzelnen Nebenluftkanal-ganges 81 die (vorgenannte) Sensoreinheit 12 passiert.

Mit den Sensoren (Temperatursensor und / oder rauchgaspartikelsensibler Sensor) der innerhalb des Luftströmungsquerschnittes installierten Sensoreinheit 12 wird die Temperatur und der Rauchpartikelanteil der Abluft 10 sensorisch erfaßt und danach in entsprechende Signale, die den ermittelten Zuständen entsprechen, umgesetzt. Das Überwachungsergebnis wird danach über (nicht gezeigte) Signalleitungen, die den Sensoren angeschlossen sind, der Temperatur- und / oder Rauchwarngebereinheit (eines rumpfinternen Überwachungssystems) zugeleitet, die eine zentrale Bewertung des Überwachungsergebnisses vornimmt und gegebenenfalls zu verändernde Zustände des kontrollierten Rumpfbereiches elektronisch veranlaßt.
Die am Nebenluftaustritt 82 der beiden Nebenluftkanalgängen 81 ausströmende Abluft 10 (Nebenluft) des Rumpfbereiches 11 (des Frachtraumes) wird sich in der Injektormischkammer 3 mit der Zuluft 5 des rumpfinternen Luftverteilernetzes vereinen. Die vereinten Luftströme werden danach als rezirkulierende Injektormischluft 19 in horizontaler Richtung den Luftströmungsquerschnitt der Injektormischkammer 3 durchströmen, die dann dem ausgangs der Injektormischkammer 3 liegenden (sogenannten) Luftaustrittsendbereich 17 zuströmt und über den betreffenden (der Körperwandung 22 des Injektorluftauslasses 1 ausgenommenen) Ablufteingang 13 in den Rumpfbereich 11 (den Frachtraum) einströmt. Dabei begünstigen die innerhalb des Luftaustrittsendbereich 17 angeordneten Luftleitgitter 16 das Strömungsverhalten der Injektormischluft 19.

Dabei wird mit der am Abluftabgang 13 des Injektorluftauslasses 1 rezirkulierten Injektormischluft 19 ein Raumluftströmungsprofil mit starkem Luftgeschwindigkeitsfeld (mit großer Luftgeschwindigkeit) und starker Luftdurchmischung der von ihr beblasenen Luftbereiche mit Entkopplung vom Beladungs- und / oder Belastungszustand im Rumpfbereich 11 erzeugt wird, wodurch (dort) eine lokale Lufttemperaturschichtung verhindert und eine lokale homogene Temperatur- und Rauchverteilung erreicht wird. Die den Überwachungsprozeß charakterisierenden verfahrensmäßigen Abfolgen wiederholen sich kontinuierlich und permanent.

Zusammenfassend wird wiedergegeben, daß der nach dem Injektorprinzip ausgebildete Luftauslaß für das Frachtströmungsprofil eines Passagier- oder Transportflugzeuges eine Quellen-Senken-Verteilung darstellt, durch die ein starkes Geschwindigkeitsfeld im Frachtraum erzeugt sowie eine große Luftmenge dem Nebenlufteingang 9 (Nebenstromkanaleingang) zugeführt wird. Daraus resultiert eine starke Durchmischung der Frachtraumluft mit einer Entkopplung vom Belastungszustand. Die gute Durchmischung führt zu einer homogenen Temperatur- und (im ungünstigen Fall) Rauchverteilung. Die Rezirkulation der Abluft des Frachtraumes zum Nebenstromkanal 8 stellt sicher, daß die beiden Sensoren der Sensoreneinheit 12 (für ihren bezweckten Einsatz) optimale Bedingungen vorfinden. Dabei produzieren die Sensoren einen beladungsunabhängigen minimierten Meßfehler des Überwachungsergebnisses, der außerdem die Zuverlässigkeit der Temperaturregelung sowie der Rauchwarngebung maßgeblich erhöht. Die Temperaturregelungsfunktion sowie das Ansprechverhalten der im Flugzeug installierten Rauchwarngeber wird - verglichen mit den traditionellen Lösungen im Flugzeugbau - wesentlich verbessert und für die Flugzeugbetreiber (Airliner) sicherer. Die große Rezirkulationsmenge der den Abluftausgang 13 des Injektorluftauslasses 1 verlassenden Injektormischluft 19 erzeugt dabei ein Raumluftströmungsprofil mit großer Geschwindigkeit, weshalb eine dermaßen gute Luftdurchmischung der tatsächlich vorhandenen , repräsentativen Frachtraumluft erreicht und damit auch eine Temperaturschichtung dieser Frachtraumluft verhindert wird. Diese (mit dem Injektorluftauslaß initiierten) vorteilhaften Sachverhalte bilden die Basis für eine wirkungsvolle Temperatur- und Rauchgasüberwachung sensibeler Flugzeugbereiche. Letztlich wird erwähnt, daß mit dem Einsatz des Injektorluftauslasses 1 der Einsatz separater externer Unterdruckquellen (Gebläse) zur Zwangsbelüftung der frachtraumverteilten Sensoren entfällt.

## Patentansprüche

1. Injektorluftauslaß für abgeschlossene Rumpfbereiche eines Flugzeuges, dessen Körperwandung (2) eine Injektormischkammer (3) einschließt, mit einem der Körperwandung (2) ausgenommenen Zulufteingang (4), über den eine aus einem rumpfinneren Luftverteilernetz bezogene temperaturgeregelte Rezirkulationsluft als Zuluft (5) zugeführt werden kann, dem ein in die Injektormischkammer (3) ragendes Luftabzweigelement (6), das den Zuluftstrom aufteilt, angesetzt ist, wobei dem Luftabzweigelement (6) eine Luftabzweigung (61) abgezweigt ist, durch die ein den Zulufteingang (4) passierender Zuluftstrom in die Injektormischkammer (3) einströmt, der nach dem Passieren einer Injektordüse (7), die nahe dem Ausgang der einzelnen Luftabzweigung (61) installiert ist, einen notwendigen Impuls erhält, so daß er in der Injektormischkammer (3) einen Luftunterdruck erzeugt, wobei der Körperwandung (2) ein Nebenlufteingang (9) ausgenommen ist, der in einen Nebenluftkanal (8), der in der Injektormischkammer (3) lokalisiert ist, mündet, durch den wegen des bestehenden Luftunterdruckes eine Abluft (10) eines Rumptbereiches (11) als Nebenluft in den Nebenluftkanal (8) angesaugt werden kann, wobei die angesaugte Abluft (10) nach dem Passieren des Nebenlufteinganges (9) in den Nebenluftkanal (8) zur Injektormischkammer (3) abgezweigt wird, und wobei der Körperwandung (2) wenigstens ein Abluftausgang (13) ausgenommen ist, durch den die in der Injektormischkammer (3) vereinten Luftströme der Zuluft (5) des internen Luftverteilernetzes und der Abluft (10) des Rumpfbereiches (11) als rezirkulierte Injektormischluft (19) in den Rumpfbereich (11) zurückgeführt werden können, **dadurch gekennzeichnet, daß** das Luftabzweigelement (6) zwei Luftabzweigungen (61) aufweist, die einem Anschlußbereich (62) des Luftabzweigelementes (6), der dem Zulufteingang (4) formschlüssig angesetzt ist, oder einer dem Anschlußbereich (62) folgenden Verlängerung T-förmig abgezweigt sind und den Zuluftstrom aufteilen, derart, daß die aufgeteilten Zuluftteilströme (51), die dem Zuluftstrom (5), der den Zulufteingang (4) passiert, abgezweigt sind, zueinander entgegengesetzt in die Injektormischkammer (3) einströmen, wobei der einzelne Zuluftteilstrom (51) einen charakteristischen Treibluftstrom darstellt, der nach dem Passieren der Injektordüse (7), die nahe dem Ausgang der betreffenden Luftabzweigung (61) installiert ist, den notwendigen Impuls erhält, so daß er in der Injektormischkammer (3) einen Luftunterdruck erzeugt, wobei die Luftabzweigungen (61) und ein Teilwandabschnitt (21) der Körperwandung (2) des Injektorauslasses (3) den Nebenluftkanal (8), der horizontal gelegen ist, eingrenzen, und wobei mittig dem Teilwandabschnitt (21) der Nebenlufteingang (9) ausgenommen ist, durch den wegen des bestehenden Luftunterdruckes die Abluft (10) des Rumpfbereiches (11) als Nebenluft in den Nebenluftkanal (8) angesaugt wird, dermaßen, daß die angesaugte Abluft (10) nach dem Passieren des Nebenlufteinganges (9) in die beiden Nebenluftkanalgänge (81) des Nebenluftkanals (8) zur Injektormischkammer (3) abgezweigt wird, und wobei den nachgeordneten Folgewandabschnitten (22) der Körperwandung (2), die an den Teilwandabschnitt (21) angrenzen, jeweils wenigstens ein Abluftausgang (13) der Injektormischkammer (3) ausgenommen ist, durch den die in der Injektormischkammer (3) vereinten Luftströme der Zuluft (5) des internen Luftverteilernetzes und der Abluft (10) des Rumpfbereiches (11) als rezirkulierte Injektormischluft (19) in den Rumpfbereich (11) zurückgeführt werden.

2. Injektorluftauslaß nach Anspruch 1, **dadurch gekennzeichnet, daß** innerhalb des Strömungsquerschnittes des Nebenluftkanals (8) eine Sensoreinheit (12) installiert ist, die die Temperatur und den Rauchpartikelanteil der Abluft (10) des Rumpfbereiches (11) sensorisch erfaßt und die ermittelten Zustände in entsprechende Signale umsetzt, die einer ihr extern angeschlossenen Temperaturregeleinheit und einer extern angeschlossenen Rauchwarngebereinheit zugeleitet werden, wobei die Sensoreinheit (12) nahe wenigstens einem der betreffenden Nebenluftaustritte (82) des Nebenluftkanals (8) und innerhalb des Strömungsquerschnittes des Nebenluftkanals (8) installiert ist.

3. Injektorluftauslaß nach Anspruch 1,
**dadurch gekennzeichnet, daß** außerhalb der Körperwandung (2) dem Zulufteingang (4) ein Zuluftstutzen (14) angesetzt ist, der mit dem rumpfinneren Luftverteilernetz verbunden ist.

4. Injektorluftauslaß nach Anspruch 1, **dadurch gekennzeichnet, daß** dem Anschlußbereich (62) des Luftabzweigelementes (6) wenigstens zwei Rohrkrümmer abgezweigt sind, deren nicht gekrümmter und horizontal verlaufender Rohrendbereich in die Injektormischkammer (3) mündet, wobei den zueinander gerichteten Bogen der beiden Rohrkrümmer ein Füllelement (15) befestigt ist, das gegenüberliegend dem Nebenlufteingang (9) dem horizontalen Verlauf der Rohrendbereiche angepaßt ist.

5. Injektorluftauslaß nach Anspruch 1, **dadurch gekenzeichnet, daß** mittig dem Luftströmungsquerschnitt der einzelnen Luftabzweigung (61) wenigstens ein luftströmungsbegünstigendes erstes Luftleitgitter (16) angeordnet ist.

6. Injektorluftauslaß nach Anspruch 5, **dadurch gekennzeichnet, daß** daß erste Luftleitgitter (16) demaßen angeordnet ist, wonach es den T- Abzweigungsbereich überspannt.

7. Injektorluftauslaß nach den Ansprüchen 4 und 5, **dadurch gekennzeichnet, daß** mittig dem Luftströmungsquerschnitt der Rohrkrümmer wenigstens ein luftströmungsbegünstigendes erstes Luftleitgitter (16) angeordnet ist, das den Krümmungsbereich der beiden Rohrkrümmer überspannt.

8. Injektorluftauslaß nach Anspruch 1,
**dadurch gekennzeichnet, daß** der Luftströmungsquerschnitt des Abluftausganges (13) der Injektormischkammer (3) einen Luftaustrittsendbereich (17) der Injektormischkammer (3) umfaßt, innerhalb dem wenigstens ein luftströmungsbegünstigendes zweites Luftleitgitter (16) angeordnet ist.

9. Injektorluftauslaß nach Anspruch 2,
**dadurch gekennzeichnet, daß** der Sensoreinheit (12) wenigstens ein Temperatursensor und ein auf Rauchgaspartikel sensibilisierter Sensor integriert ist, das funktionsbezogen mit der Lufttemperaturregeleinheit und mit der Rauchwarngebereinheit elektrisch verbunden ist.

10. Injektorluftauslaß nach Anspruch 1, **dadurch gekennzeichnet, daß** der Bereich der Körperwandung (2) des Injektorauslasses (3), dem der Nebenlufteingang (9) und der Abluftausgang (13) ausgenommen ist, in eine den Rumpfbereich (11) auskleidende Innenraumverkleidung integriert ist, wobei die Öffnungen des Nebenlufteinganges (9) und des jeweiligen Abluftausganges (13) der Injektormischkammer (3) der Innenraumverkleidung ausgespart sind.

11. Injektorluftauslaß nach Anspruch 1, **dadurch gekennzeichnet, daß** der Bereich der Körperwandung (2) des Injektorauslasses (3), der den Teilwandbereich (21) und die diesem angrenzenden Folgewandbereiche (22) umfaßt, in eine den Rumpfbereich (11) auskleidende Innenraumverkleidung integriert ist, wobei die Öffnungen des Nebenlufteinganges (9) und des jeweiligen Abluftausganges (13) der Injektormischkammer (3) der Innenraumverkleidung ausgespart sind.

12. Injektorluftauslaß nach Anspruch 1, **dadurch gekennzeichnet, daß** der Injektorauslaß (3) eine in den Rumpfbereich (11) ragende autarke Einheit ist, die in die Innenraumverkleidung des Flugzeugrumpfes integriert ist, und die Luftabzweigungen (61) des Luftabzweigeelementes (6) und der Nebenluftkanal (8) sowie der Bereich der Körperwandung (2) des Injektorauslasses (3), dem der Nebenluftausgang (9) und der Abluftausgang (13) ausgenommen ist, parallel zur Innenraumverkleidung liegen und nebeneinander angeordnet sind, wobei der Zulufteingang (4) in der Innenraumverkleidung lokalisiert ist, dem von dort aus das am Flugzeugrumpf befestigte rumpfinterne Luftverteilernetz angeschlossen ist.

13. Injektorluftauslaß nach Anspruch 12, **dadurch gekennzeichnet, daß** Körperwandung (2) des Injektorauslasses (3) sich auf den Bereich bezieht, der den Teilwandbereich (21) und die diesem angrenzenden Folgewandbereiche (22) umfaßt.

14. Injektorluftauslaß nach Anspruch 10,
**dadurch gekennzeichnet, daß** der Bereich der Körperwandung (2) des Injektorauslasses (3), dem der Nebenlufteingang (9) und der Abluftausgang (13) ausgenommen ist, durch eine den Flugzeugrumpf auskleidende Innenwand (18) ersetzt ist.

15. Injektorluftauslaß nach Anspruch 11,
**dadurch gekennzeichnet, daß** der Bereich der Körperwandung (2) des Injektorauslasses (3), der den Teilwandbereich (21) und die diesem angrenzenden Folgewandbereiche (22) umfaßt, durch die den Flugzeugrumpf auskleidende Innenwand (18) ersetzt ist.

16. Verfahren zur Beblasung von abgeschlossenen Rumpfbereichen (11) eines Flugzeuges, insbesondere innerhalb der Frachtraumbereiche, mit einem Injektorluftauslaß (1) nach Ansprüch 1, der mit zur Klimatisierung und Belüftung von Rumpfbereichen (11) eines Flugzeuges eingesetzt wird, benutzt wird, mit den nachfolgenden Verfahrensschritten, nach denen
- dem Injektorluftauslaß (1) ein Teil der temperaturgeregelten aufbereiteten Rezirkulationsluft, die aus einem rumpfinneren Luftverteilernetz des Flugzeuges bezogen wird, als Zuluft (5) zugeführt wird,
- der Zuluftstrom von einem mit dem Zulufteingang (4) des Injektorauslasses verbundenen Luftabzweigelement (6), das in eine Injektormischkamme (3), hineinragt, strömungsmäßig direkt oder aufteilt eingeleitet wird, wobei der direkt eingeleitete Zuluftstrom horizontal und parallel zur Körperwandung (2) des Injektoreinlasses in die Injektormischkammer (3) einströmen wird oder wenigstens zwei entgegengesetzt gerichtete Zuluftteilströme (51) horizontal und parallel zur Körperwandung (2) des Injektoreinlasses in die Injektormischkammer (3) einstromen werden,
- der einzelne Zuluftteilstrom (51), der einen charakteristischen Treibluftstrom darstellt, eine Injektordüse (7), die nahe dem Ausgang des Luftabzweigelementes (6) sitzt, passieren wird und durch die Injektordüse (7) einen notwendigen Impuls erhalten wird das in der Injektormischkammer (3) einen Luftunterdruck erzeugen wird,
- aus dem Rumpfbereich Abluft (10) in einen dem Injektorauslaß integrierten Nebenluftkanal (8) angesaugt, wobei der Abluftstromfluß erst infolge des erzeugten Luftunterdruckes in der Injektormischkammer (3) einsetzen wird die durch einen Nebenlufteingang (9) eines Nebenluftkanals (8), der den Nebenluftkanal (8) in Nebenluftkanalgänge unterteilt, einströmen wird,
- die Luftströme der Zuluft (5) und der Abluft (10) des Rumpfbereiches (11) sich in der Injektormischkammer (3) vereinem werden und danach über wenigstens einen der Körperwandung (2) des Injektorauslasses ausgenommenen Abluftausgang (13) als rezirkulierte Injektormischluft (19) in den Rumpfbereich (11) zurück geführt werden, bei dem außerdem
die vereinten Luftströme der Zuluft (5) und Nebenluft als rezirkulierte Injektormischluft (19) ein am Abluftabgang (13) innerhalb eines Austrittsendbereiches (17) der Injektormischkammer (3) gelegenes luftströmungsbegünstigendes Luftleitgitter (16) passieren werden und mit der am Abluftabgang (13) des Injektorluftauslasses (1) rezirkulierten Injektormischluft (19) ein Raumluftströmungsprofil mit starkem Luftgeschwindigkeitsfeld und starker Luftdurchmischung der von ihr beblasenen Luftbereiche mit Entkopplung vom Beladungs- und / oder Belastungszustand im Rumptbereich (11) erzeugt wird, wodurch dort eine lokale Lufttemperaturschichtung verhindert und eine lokale homogene Temperatur- und Rauchverteilung erreicht wird.

17. Verfahren nach Ansprüch 16, **dadurch gekennzeichnet, daß** die angesaugte Nebenluft wird nahe einem Nebenluftaustritt (82) des betreffenden Nebenluftkanalganges, durch den die angesaugte Abluft (10) parallel und den Zuluftteilströmen (51) nebeneinander liegend in die Injektormischkammer (3) strömt, eine dort innerhalb des Strömungsquerschnittes integrierte Sensoreinheit (12), mit der die Temperatur und der Rauchpartikelanteil der Abluft (10) sensorisch erfaßt wird und danach in Signale, die den ermittelten Zuständen entsprechen, umgesetzt wird, die einer ihr angeschlossenen Temperaturregeleinheit und einer Rauchwarngebereinheit zugeleitet werden, passieren wird.

## Claims

1. **Injector air outlet** for closed fuselage regions of an aircraft, the body wall (2) of which injector air outlet encloses an injector mixing chamber (3), comprising an intake-air inlet (4), opened out of the body wall (2), via which temperature-controlled recirculation air drawn from an in-fuselage air distribution network can be delivered as intake air (5), joined to which intake-air inlet there is an air branching element (6) which projects into the injector mixing chamber (3) and divides up the intake-air current, there branching off from the air branching element (6) an air branch (61) through which an intake-air current flows, passing through the intake-air inlet (4), into the injector mixing chamber (3), which intake-air current, following passage through an injector nozzle(7) installed close to the output of the individual air branch (61), receives a necessary impulse, so that it generates a negative air pressure in the injector mixing chamber (3), there being opened out of the body wall (2) a secondary air-inlet (9) which opens into a secondary-air channel (8) located in the injector mixing chamber (3), through which secondary-air inlet discharged air (10) of a fuselage region (11) can be drawn as secondary air, due to the existing negative air pressure, into the secondary-air channel (8), the drawn-in discharged air (10) being branched-off, following passage through the secondary-air inlet (9), into the secondary-air channel (8) to the injector mixing chamber (3), and there being opened out of the body wall (2) at least one discharged-air outlet (13) through which the air currents of, on the one hand, the intake air (5) of the internal air distribution network and, on the other hand, the discharged air (10) of the fuselage region (11), which are combined in the injector mixing chamber (3), can be returned as recirculated injector mixed air (19) into the fuselage region (11),
**characterized in that** the air branching element (6) comprises two air branches (61) which are branched-off in the form of a T from a junction region (62) of the air branching element (6), the said junction region joining the intake-air inlet (4) with a positive fit, or from an extension following the junction region (62), and divide up the intake-air current in such a way that the divided intake-air partial currents (51) branched off from the intake-air current (5) which passes through the intake-air inlet (4) flow into the injection mixing chamber (3) in opposite directions relative to one another, the individual intake-air partial current (51) constituting a characteristic driving air current which, following passage through the injector nozzle (7) installed close to the outlet of the respective air branch (61), receives the necessary impulse so that it generates a negative air pressure in the injector mixing chamber (3), the air branches (61) and a partial wall section (21) of the body wall (2) of the injector outlet (3) delimiting the secondary-air channel (8), which lies horizontally, and the secondary-air inlet (9) being opened out of the centre of the partial wall section (21), through which secondary-air inlet the discharged air (10) of the fuselage region (11) is drawn as secondary air, due to the existing negative air pressure, into the secondary-air channel (8) in such a way that the drawn-in discharged air (10) is branched off, following passage through the secondary-air inlet (9), into the two secondary-air channel passages (81) of the secondary-air channel (8) to the injector mixing chamber (3), and there being opened out from each of the successive continuation wall sections (22) of the body wall (2) which adjoin the partial wall section (21) at least one discharged-air outlet (13) of the injector mixing chamber (3), through which discharged-air outlet the air currents of, on the one hand, the intake air (5) of the internal air distribution network and, on the other hand, the discharged air (10) of the fuselage region (11), which are combined in the injector mixing chamber (3), are returned as recirculated injector mixed air (19) into the fuselage region (11).

2. Injector air outlet according to claim 1,
**characterized in that** there is installed, within the flow cross-section of the secondary-air channel (8), a sensor unit (12) which senses the temperature and the fume particulate content of the discharged air (10) of the fuselage region (11) and converts the determined states into corresponding signals which are fed to a temperature control unit, connected externally to it, and to an externally connected fume warning unit, the sensor unit (12) being installed close to at least one of the respective secondary-air outlets (82) of the secondary-air channel (8) and within the flow cross-section of the secondary-air channel (8).

3. **Injector air outlet** according to claim 1,
**characterized in that** an intake-air connection piece (14), which is connected to the in-fuselage air distribution network, joins the intake-air inlet (4) outside the body wall (2).

4. **Injector air outlet** according to claim 1,
**characterized in that** there are branched off from the junction region (62) of the air branching element (6) at least two pipe elbows whose non-curved and horizontally aligned pipe end region opens into the injection mixing chamber (3), there being fixed to the mutually facing bends of the two pipe elbows a filler element (15) which is adapted, opposite the secondary-air inlet (9), to the horizontal course of the pipe end regions.

5. Injector air outlet according to claim 1,
**characterized in that** at least one first air routing grid (16) which promotes the flow of air is disposed in the centre of the air flow cross-section of the individual air branch (61).

6. Injector air outlet according to claim 5,
**characterized in that** the first air routing grid (16) is disposed in such a way that it spans the T-branch region.

7. Injector air outlet according to claims 4 and 5,
**characterized in that** at least one first air routing grid (16), which promotes the flow of air and spans the curved region of the two pipe elbows, is disposed in the centre of the air flow cross-section of the pipe elbows.

8. **Injector air outlet** according to claim 1,
**characterized in that** the air flow cross-section of the discharged-air outlet (13) of the injector mixing chamber (3) includes an air outlet end region (17) of the injector mixing chamber (3) within which is disposed at least one second air routing grid (16) which promotes the flow of air.

9. Injector air outlet according to claim 2,
**characterized in that** integral with the sensor unit (12) is at least a temperature sensor and a sensor for sensing combustion gas particulates, which is electrically connected, in relation to function, to the air temperature control unit and to the fume warning unit.

10. **Injector air outlet** according to claim 1,
**characterized in that** the region of the body wall (2) of the injector outlet (3) out of which are opened the secondary-air inlet (9) and the discharged-air outlet (13) is integrated into an interior space cowling which lines the fuselage region (11), the openings of the secondary-air inlet (9) and of the respective discharged-air outlet (13) of the injector mixing chamber (3) being opened out of the interior space cowling.

11. Injector air outlet according to claim 1,
**characterized in that** the region of the body wall (2) of the injector outlet (3) which includes the partial wall region (21) and the continuation wall regions (22) adjoining the latter is integrated into an interior space cowling which lines the fuselage region (11), the openings of the secondary-air inlet (9) and of the respective discharged-air outlet (13) of the injector mixing chamber (3) being opened out of the interior space cowling.

12. Injector air outlet according to claim 1,
**characterized in that** the injector outlet (3) is an autonomous unit, projecting into the fuselage region (11), which is integrated into the interior space cowling of the aircraft fuselage, and the air branches (61) of the air branching element (6) and the secondary-air channel (8), as well as the region of the body wall (2) of the injector outlet (3) out of which the secondary-air outlet (9) and the discharged-air outlet (13) are opened, lie parallel to the interior space cowling and are disposed next to one another, the intake-air inlet (4) being located in the interior space cowling, joined to which intake-air inlet from that point is the in-fuselage air distribution network which is attached to the aircraft fuselage.

13. Injector air outlet according to claim 12,
**characterized in that** the body wall (2) of the injector outlet (3) relates to the region which includes the partial wall region (21) and the continuation wall regions (22) adjoining the latter.

14. Injector air outlet according to claim 10,
**characterized in that** the region of the body wall (2) of the injector outlet (3) out of which are opened the secondary-air inlet (9) and the discharged-air outlet (13) is replaced by an inner wall (18) which lines the aircraft fuselage.

15. **Injector air outlet** according to claim 11,
**characterized in that** the region of the body wall (2) of the injector outlet (3) which includes the partial wall region (21) and the continuation wall regions (22) adjoining the latter is replaced by the inner wall (18) which lines the aircraft fuselage.

16. **Method for blowing out closed fuselage regions (11) of** an aircraft, particularly within the cargo compartment regions, by means of an injector air outlet (1) according to claim 1 which is used concomitantly for the air-conditioning and ventilation of fuselage regions (11) of an aircraft, comprising the following method steps, according to which
- a portion of the temperature-controlled, conditioned recirculation air, which is drawn from an in-fuselage air distribution network of the aircraft, is delivered as intake air (5) to the injector air outlet (1),
- the intake-air current is introduced, directly or divided in respect of its flow, by an air branching element (6) which is joined to the intake-air inlet (4) of the injector outlet and projects into an injector mixing chamber (3), whereby the directly introduced intake-air current will flow into the injector mixing chamber (3) horizontally and in parallel to the body wall (2) of the injector inlet, or at least two opposingly directed intake-air partial currents (51) will flow into the injector mixing chamber (3) horizontally and in parallel to the body wall (2) of the injector inlet,
- the individual intake-air partial current (51), which constitutes a characteristic driving air current, will pass through an injector nozzle (7) located close to the outlet of the air branching element (6) and through the injector nozzle (7) will receive a necessary impulse which will generate a negative air pressure in the injector mixing chamber (3),
- discharged air (10) is drawn out of the fuselage region into a secondary-air channel (8) integrated into the injector outlet, whereby the discharged-air current flow will form first in the injector mixing chamber (3) due to the generated negative air pressure, which discharged air will flow through a secondary-air inlet (9) of a secondary-air channel (8) which divides the secondary-air channel (8) into secondary-air channel passages,
- the air currents of the intake air (5) and of the discharged air (10) of the fuselage region (11) will combine in the injector mixing chamber (3) and are then returned into the fuselage region (11), as recirculated injector mixed air (19), via at least one discharged-air outlet (13) opened out of the body wall (2) of the injector outlet, in which, in addition, the combined air currents of the intake air (5) and secondary air will pass, as recirculated injector mixed air (19), an air routing grid (16) which promotes the flow of air and is located at the discharged-air outlet (13), within an outlet end region (17) of the injector mixing chamber (3), and there is generated in the fuselage region (11), by means of the recirculated injector mixed air (19) at the discharged-air outlet (13) of the injector air outlet (1), a space air flow profile having a strong air velocity field and intense intermingling of air in the air regions blown out by the recirculated injector mixed air, independently the loading and/or stress conditions, as a result of which, at that location, a local air temperature stratification is prevented and a local homogeneous temperature and fume distribution is achieved.

17. Method according to claim 16, **characterized in that** the drawn-in secondary air will pass close to a secondary-air outlet (82) of the respective secondary-air channel passage through which the drawn-in discharged air (10) flows into the injector mixing chamber (3) in parallel and adjacent to the intake-air partial currents (51), and a sensor unit (12), integrated at that location within the flow cross-section, by means of which the temperature and the fume particulate content of the discharged air (10) is sensed and then converted into signals, corresponding to the determined states, which are fed both to a temperature control unit connected to it and to a fume warning unit.

## Revendications

1. Buse d'aération pour zones de fuselage fermées d'un avion dont la paroi de bâti (2) enserre une chambre de mélange à injecteur, avec une arrivée d'air amené (4) dégagée de la paroi de bâti (4) et par l'intermédiaire de laquelle un air de recirculation à réglage de température émanant d'un réseau de distribution d'air à l'intérieur du fuselage peut être acheminé comme air amené (5), sur laquelle repose un élément répartiteur d'air (6) faisant saillie dans la chambre de mélange à injection (3) et répartissant le courant d'air amené, une dérivation d'air (61) ayant été dérivée de l'élément de dérivation d'air, dérivation à travers laquelle un courant d'air amené (4) passant par l'arrivée d'air amené (4) s'engouffre dans la chambre de mélange (3), ledit courant d'air amené recevant, après le passage d'une douille d'injection (7) installée près de la sortie de la dérivation d'air (61), une impulsion nécessaire de manière à produire dans la chambre de mélange à injecteur (3) une sous-pression d'air, une arrivée d'air secondaire (9) débouchant dans un canal d'air secondaire (8) localisé dans la chambre de mélange à injecteur (3) ayant été dégagé de la paroi de bâti (2), sous-pression à travers laquelle un air d'échappement (10) d'une zone de fuselage (11) peut être aspiré comme air secondaire dans le canal d'air secondaire (8), l'air d'échappement (10) aspiré étant, après le passage de l'entrée d'air secondaire (9), dévidé dans le canal d'air secondaire (8) vers la chambre de mélange à injecteur (3), au moins une sortie d'air d'échappement (13) ayant été dégagée de la paroi de bâti (2), sortie d'air d'échappement au travers de laquelle les courants d'air amené (5) du réseau de distribution de l'air et de l'air d'échappement (10) de la zone de fuselage (11) réunis dans la chambre de mélange à injecteur (3) pouvant être ramenés comme air de mélange à injecteur (19) recirculé dans la zone de fuselage (11),
**caractérisé en ce que** l'élément de dérivation de l'air (6) présente deux dérivations d'air (61) dérivées par rapport à une zone de raccordement (62) de l'élément de dérivation d'air (6) apposée avec adhérence sur l'entrée d'air amené (4) ou dérivées en forme de T par rapport à une rallonge suivant la zone de raccordement (62) et qui répartissent le courant d'air amené de telle sorte que les courants partiels d'air amené (51) représentent un courant d'air propulseur caractéristique qui, après le passage de la douille d'injection (7) logée près de la sortie de la dérivation d'air concernée (61), reçoit l'impulsion nécessaire de telle sorte que le courant partiel d'air amené produise, dans la chambre de mélange à injecteur (3), une sous-pression d'air, les dérivations d'air (61) et une section de paroi partielle (21) de la paroi de bâti (2) de la buse d'aération (3) délimitant le canal d'air secondaire (8) horizontal, et l'entrée d'air secondaire (9) ayant été dérivée de la partie centrale de la section de paroi partielle (21), entrée d'air secondaire au travers de laquelle l'air d'échappement (10) de la zone de fuselage (11) étant, à cause de la sous-pression d'air existante, aspirée comme air secondaire dans le canal d'air secondaire (8), de telle sorte que l'air d'échappement (10) aspiré est dérivé, après le passage de l'entrée d'air secondaire (9), dans les couloirs des canaux d'air secondaires (81) du canal d'air secondaire (8), en direction de la chambre de mélange à injecteur (3), et au moins une sortie d'air d'échappement (13) de la chambre de mélange à injecteur (3) ayant dérivé, à chaque fois, des segments de la paroi suivante (22) de la paroi de bâti (2) disposés en amont, segments qui sont attenants à la section de paroi partielle (21), les courants d'air amené (5) du réseau de interne de distribution d'air et les courants d'air d'échappement (10) de la zone fuselage (11à réunis dans la chambre de mélange à injecteur (3) étant ramenés dans la zone de fuselage (11) à travers la sortie d'air d'échappement.

2. Buse d'aération selon la revendication 1, **caractérisée en ce que** une unité à capteur (12) captant de manière sensorielle la température et le pourcentage de particules de fumée de l'air d'échappement (10) de la zone de fuselage (11) a été installée à l'intérieur de la section transversale d'écoulement du canal d'air secondaire (8) et convertissant les situations communiquées dans des signaux correspondants acheminés vers une unité de réglage de la température raccordée à l'unité à capteur, à l'extérieur, et vers une unité émettant des signaux d'avertissement en cas de fumée raccordée à l'extérieur, l'unité à capteur (12) ayant été installée près d'au moins une des sorties d'air secondaire (82) concernée du canal d'air secondaire (8) et à l'intérieur de la section transversale d'écoulement du canal d'air secondaire (8).

3. Bouche d'aération selon la revendication 1, **caractérisée en ce que** un raccord d'air amené (14) relié à un réseau de distribution d'air situé à l'intérieur du fuselage a été disposé en dehors de la paroi de bâti (2), contre la sortie d'air amené (4) .

4. Bouche d'aération selon la revendication 1, **caractérisée en ce que** au moins deux tubes coudés dont la zone d'extrémité de tuyau non courbe et horizontale débouche dans la chambre de mélange à injecteur (3), un élément de remplissage (15) adapté, en face de l'entrée d'air secondaire (9), au trajet horizontal des segments d'extrémité, ayant été fixé aux arcs orientés l'un vers l'autre des deux tubes coudés.

5. Bouche d'aération selon la revendication 1, **caractérisée en ce que** au moins une grille de conduite d'air (16) favorisant l'écoulement d'air a été disposé au centre de la section transversale d'écoulement de la dérivation d'air individuelle (61).

6. Bouche d'aération selon la revendication 5, **caractérisée en ce que** la première grille de conduite d'air (16) a été disposée de manière à enjamber le segment de dérivation en forme de T.

7. Bouche d'aération selon les revendications 4 et 5, **caractérisée en ce que** au moins une première grille de conduite d'air (16) favorisant l'écoulement d'air et enjambant le segment de courbure des deux tubes coudés a été disposée au centre de la section transversale d'écoulement d'air.

8. Bouche d'aération selon la revendication 1, **caractérisée en ce que** la section transversale d'écoulement d'air de la sortie d'air d'échappement (13) de la chambre de mélange à injecteur (3) enserre un segment d'extrémité de sortie d'air (17) de la chambre de mélange à injecteur (3), segment à l'intérieur duquel au moins une deuxième grille de conduite d'air (16) favorisant un écoulement d'air a été disposée.

9. Bouche d'aération selon la revendication 2, **caractérisée en ce que** au moins un capteur de température et un capteur sensibilisé aux particules de gaz de fumée raccordé de manière fonctionnelle et par voie électrique à l'unité de réglage de la température de l'air et à l'unité donnant des signaux d'avertissement en cas de fumée ont été intégrés à l'unité à capteur (12).

10. Bouche d'aération selon la revendication 1, **caractérisé en ce que** la zone de la paroi de bâti (2) de la bouche d'aération (3) de laquelle ont été dégagées l'entrée d'air secondaire (9) et la sortie d'air d'échappement (13) a été intégrée dans un revêtement de l'espace intérieur revêtant la zone de fuselage (11), les ouvertures de l'entrée d'air secondaire (9) et de la sortie d'air d'échappement (13) correspondante de la chambre de mélange à injecteur (3) ayant été évidées du revêtement de l'espace intérieur.

11. Bouche d'aération selon la revendication 1, **caractérisée en ce que** la zone de la paroi de bâti (2) de la sortie à injecteur (3) comprenant la zone de paroi partielle (21) et les zones de la paroi suivante (22) attenant à la zone de paroi partielle a été intégrée dans un revêtement d'espace intérieur revêtant la zone de fuselage (11), les ouvertures de l'entrée d'air secondaire (9) et de la sortie d'air d'échappement (13) correspondante de la chambre de mélange à injecteur (3) ayant été évidées du revêtement de l'espace intérieur.

12. Bouche d'aération selon la revendication 1, **caractérisée en ce que** la bouche d'aération (3) est une unité autarcique faisant saillie dans la zone de fuselage (11) et intégrée dans le revêtement de l'espace intérieur du fuselage de l'avion, et **en ce que** les dérivations d'air (61) de l'élément de dérivation d'air (6) et du canal d'air secondaire (8) ainsi que le segment de la paroi de bâti (2) de la bouche d'aération (3), duquel a été évidé la sortie d'air secondaire (9) et la sortie d'air d'échappement (13), sont parallèles au revêtement de l'espace intérieur et disposés les uns à côté des autres, l'entrée d'air amené (4) ayant été localisée dans le revêtement de l'espace intérieur, auquel le réseau de distribution d'air situé à l'intérieur du fuselage et fixé au fuselage d'avion a été raccordé.

13. Bouche d'aération selon la revendication 12, **caractérisée en ce que** la paroi de bâti (2) de la bouche d'aération (3) se rapporte à la zone comprenant la zone de paroi partielle (21) et les segments de la paroi suivante attenant à la zone de paroi partielle.

14. Bouche d'aération selon la revendication 10, **caractérisée en ce que** le segment de la paroi de bâti (2) de la bouche d'aération (3), duquel l'entrée d'air secondaire (9) et la sortie d'air d'échappement (13) ont été dégagées, a été remplacé par une paroi interne (18) revêtant le fuselage d'avion.

15. Bouche d'aération selon la revendication 11, **caractérisée en ce que** le segment de la paroi de bâti (2) de la bouche d'aération (3) comprenant la zone de paroi partielle (21) et les segments de la paroi suivante (22) attenant à la zone de paroi partielle a été remplacé par la paroi interne (18) revêtant le fuselage de l'avion.

16. Procédé de soufflage de zones de fuselage (11) fermées d'un avion, en particulier à l'intérieur des zones de l'espace de fret, avec une bouche d'aération (1) selon la revendication 1 activée en même temps pour climatiser et aérer les zones de fuselage (11) d'un avion, et avec les étapes de procédé suivantes, selon lesquelles
- une partie de l'air de recirculation à réglage de température, préparé et soutiré d'un réseau de distribution d'air situé à l'intérieur du fuselage de l'avion a été acheminé comme air amené (5) vers la bouche d'aération (1),
- le courant d'air amené d'un élément de dérivation d'air (6) raccordé à l'entrée d'air amené (4) de la bouche d'aération et s'enfonçant dans une chambre de mélange à injecteur (3) est introduit directement ou séparément en fonction de l'écoulement, le courant d'air amené introduit directement allant s'écouler dans la chambre de mélange à injecteur (3), horizontalement et parallèlement à la paroi de bâti (2) de l'entrée à injecteur ou au moins deux courants partiels d'air amené (51) orientés dans des directions opposées allant s'écouler dans la chambre de mélange à injecteur (3), horizontalement et parallèlement à la paroi de bâti (2) de l'entrée à injecteur,
- le courant partiel d'air amené (51) individuel qui représente un courant d'air propulseur caractéristique passera une douille d'injection (7) reposant près de la sortie de l'élément de dérivation d'air (6) et recevra, via la douille d'injection (7), une impulsion nécessaire qui produira une sous-pression d'air dans la chambre de mélange à injecteur (3),
- l'air d'échappement (10) est aspiré à partir de la zone de fuselage dans un canal d'air secondaire (8) intégré dans la bouche d'aération, le flux de courant d'air d'échappement allant tout d'abord, suite à la sous-pression d'air produite, s'introduire dans la chambre de mélange à injecteur (3) qui s'écoulera à travers une entrée d'air secondaire (9) d'un canal d'air secondaire (8) qui divise le canal d'air secondaire (8) en couloirs de canaux d'air secondaire,
- les courants d'air de l'air amené (5) et de l'air d'échappement (10) de la zone de fuselage (11) se réuniront dans la chambre de mélange à injecteur (3) puis seront ramenées, comme air de mélange à injecteur recirculé (19), dans la zone de fuselage (11), par l'intermédiaire d'au moins une sortie d'air d'échappement (13) évidée de la paroi de bâti (2) de la bouche d'aération,
les courants d'air amené (5) et d'air secondaire allant par ailleurs passer comme air de mélange à injecteur recirculé (19) dans une grille de conduite d'air (16) favorisant l'écoulement d'air et située à la sortie d'air d'échappement (13), à l'intérieur d'un segment d'extrémité de sortie (17) de la chambre de mélange à injecteur (3) et avec l'air de mélange à injecteur recirculé à la sortie d'air d'échappement (13) de la sortie d'air à injecteur (1), un profil d'écoulement d'air ambiant avec un champ de vitesse d'air puissant et un mélange d'air puissant des zones d'air soufflées par le mélange est produit avec désaccouplement de la situation de chargement et / ou de sollicitation dans la zone de fuselage (11), une stratification locale de la température de l'air étant ainsi évitée à cet endroit et une répartition locale homogène de la température et de la fumée étant obtenue.

17. Procédé selon la revendication 16, **caractérisé en ce que** l'air secondaire aspiré devient, près d'une sortie d'air secondaire (82) du couloir de canal d'air secondaire à travers lequel l'air d'échappement (10) aspiré s'écoule parallèlement et à côté des courants partiels d'air amené (51) jusque dans la chambre de mélange à injecteur (3), une unité à capteur (12) intégrée à cet endroit dans la section transversale de l'écoulement, avec laquelle la température et les particules de fumée de l'air d'échappement (10) sont saisies par capteurs puis converties en signaux correspondant aux situations saisies, lesdits signaux étant conduits jusqu'à une unité de réglage de la température et une unité émettant des signaux d'avertissement en cas de fumée, raccordées à l'unité à capteur.
